# FASCICULE DE BREVET EUROPEEN

(11) **EP 1 596 080 B1**
(45) Date de publication et mention de la délivrance du brevet: **14.05.2008**
(21) Numéro de dépôt: 05290861.3
(22) Date de dépôt: 19.04.2005
(51) Int. Cl.: F16C 39/02

(54) **Palier magnétique actif radial et machine tournante pourvue d'un tel palier**
Elektromagnetische radiale Lagerung und rotierende Maschine mit einem solchen Lager
Electromagnetic radial bearing and rotary machine provided with such a bearing

(30) Priorité: 13.05.2004 FR 0405202
(43) Date de publication de la demande: 16.11.2005
(73) Titulaire: Thermodyn, 92400 Courbevoie (FR)
(72) Inventeur: Pugnet, Jean-Marc, 71200 Le Creusot (FR)
(74) Mandataire: Dossmann, Gérard

(56) Documents cités:
- FR-A- 2 614 375
- PATENT ABSTRACTS OF JAPAN vol. 0161, no. 57 (M-1236), 16 avril 1992 (1992-04-16) & JP 04 008911 A (TOSHIBA CORP), 13 janvier 1992 (1992-01-13)
- PATENT ABSTRACTS OF JAPAN vol. 2000, no. 07, 29 septembre 2000 (2000-09-29) & JP 2000 097237 A (KOBE STEEL LTD), 4 avril 2000 (2000-04-04)
- PATENT ABSTRACTS OF JAPAN vol. 1995, no. 07, 31 août 1995 (1995-08-31) & JP 07 103231 A (EBARA CORP), 18 avril 1995 (1995-04-18)

## Description

L'invention concerne les machines électriques et turbomachines tournantes et se rapporte plus particulièrement aux paliers magnétiques radiaux actifs.

Un tel palier magnétique actif radial, selon le préambule de la revendication 1, est connu du document JP 2000 097237 A.

Dans les machines tournantes, les paliers magnétiques actifs radiaux sont utilisés pour maintenir radialement les extrémités mutuellement opposées du rotor dans le stator.

Ces paliers magnétiques sont essentiellement constitués d'électroaimants régulièrement répartis autour du rotor, à chaque extrémité de celui-ci. Le bobinage de chaque électroaimant est alimenté par une source de courant associée à un régulateur de courant apte à réguler l'alimentation autour de valeurs de consigne pour maintenir le rotor en position sensiblement centrale par rapport aux électroaimants. Des paliers auxiliaires sont utilisés pour supporter le rotor en cas de dysfonctionnement des paliers actifs.

En effet, en cas de défaut d'alimentation des paliers actifs, la sustentation du rotor par les paliers actifs n'est plus assurée. Le rotor est alors supporté par les paliers auxiliaires.

Tel est en particulier le cas lorsque le rotor s'étend en position horizontale. Dans ce cas, en cas de dysfonctionnement des paliers actifs, le rotor tombe dans le fond des paliers actifs où il est recueilli par les paliers auxiliaires. Malgré l'apparition de mouvements engendrés sous l'effet de la rotation du rotor en contact avec les paliers, le rotor reste maintenu sensiblement au fond des paliers auxiliaires sous l'effet de la pesanteur.

Néanmoins, lorsque le rotor se situe en position verticale, la force de la pesanteur n'est plus en mesure de maintenir le rotor contre les paliers auxiliaires de sorte que le rotor subit des mouvements erratiques constituant globalement un mouvement de précession dans le sens inverse de la vitesse de rotation du rotor dans les paliers auxiliaires. Ces mouvements engendrent des efforts relativement importants sur les paliers et de grands déplacements du rotor avec risques de contacts à l'intérieur de la machine, pouvant provoquer des dégâts irrémédiables.

Le but de l'invention est donc de pallier cet inconvénient.

Elle a donc pour objet un palier magnétique actif radial selon la revendication 1.

Lorsque le rotor s'étend en positon verticale, en cas de dysfonctionnement des moyens d'alimentation des électroaimants ou des moyens de régulation, un effort est alors appliqué sur le rotor similaire à celui engendré sous l'effet de la pesanteur, ce qui permet de stabiliser le rotor dans le fond des paliers auxiliaires.

Selon une autre caractéristique de l'invention, le palier comporte en outre une source d'alimentation de secours destinée à être mise en oeuvre en cas de dysfonctionnement de la source d'alimentation utilisée pour alimenter l'électroaimant.

Dans un mode de réalisation, le palier selon l'invention comporte un circuit de commande apte à surveiller le niveau de courant délivré aux électroaimants et comprenant des moyens de comparaison pour comparer le niveau de courant fourni aux électroaimants avec une valeur de seuil de détection du dysfonctionnement pour activer lesdits moyens pour solliciter le rotor.

L'invention a également pour objet une machine tournante comprenant un rotor entraîné en rotation par des moyens moteurs par rapport à un stator, et des paliers radiaux prévus à au moins l'une des extrémités mutuellement opposées du rotor, les paliers radiaux comprenant des paliers actifs et des paliers auxiliaires sur lesquels repose le rotor en cas de dysfonctionnement des paliers actifs ou à l'arrêt de ces paliers, caractérisée en ce que les paliers magnétiques actifs sont constitués par des paliers tels que définis ci-dessus.

Selon une caractéristique de cette machine, l'axe du rotor est vertical.

D'autres buts, caractéristiques et avantages de l'invention apparaîtront à la lecture de la description suivante, faite en référence aux dessins annexés sur lesquels :
- la figure 1 est un schéma synoptique montrant un rotor d'une machine tournante conventionnelle guidée radialement par des paliers radiaux ;
- la figure 2 illustre schématiquement la constitution des paliers actifs du palier radial de la figure 1 ;
- la figure 3 illustre le comportement du rotor par rapport au palier auxiliaire sous l'effet de la pesanteur ;
- la figure 4 illustre le comportement du rotor par rapport au palier auxiliaire en l'absence de la pesanteur ; et
- la figure 5 illustre l'agencement des moyens pour solliciter le rotor vers l'un des électroaimants conformément à l'invention.

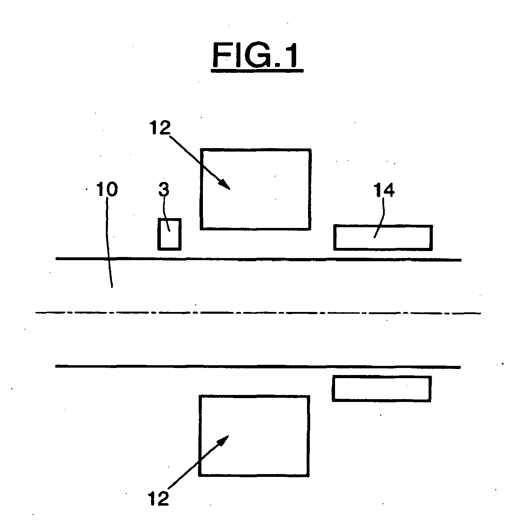

Sur la figure 1, on a représenté un exemple de réalisation d'un palier de guidage radial d'un rotor 10 par rapport à un stator (non représenté).

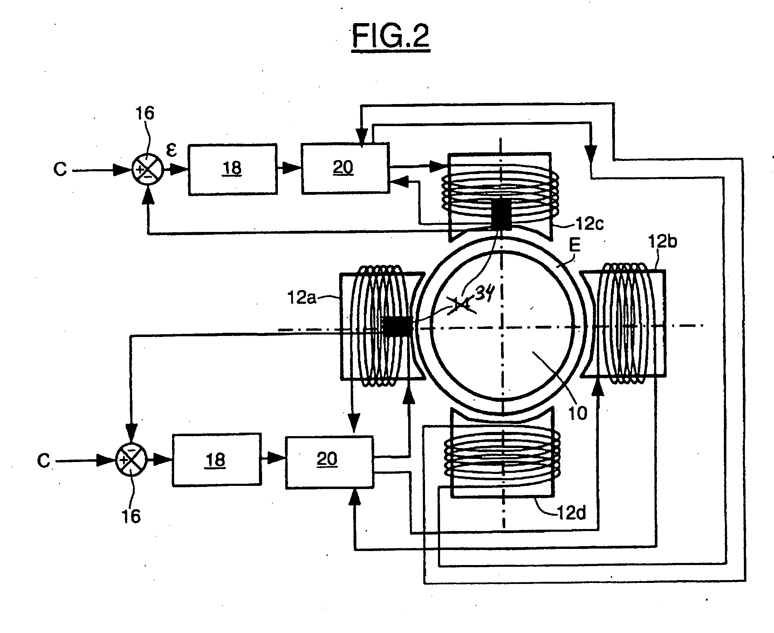

Pour assurer ce guidage, le palier radial, qui est par exemple prévu à chaque extrémité du rotor 10, comporte un palier radial actif 12 qui est utilisé lors du fonctionnement normal du palier radial et un palier auxiliaire 14 sur lequel repose le rotor en cas de dysfonctionnement du palier actif 12. En se référant également à la figure 2, le palier actif 12 comporte un ensemble d'électroaimants 12a, 12b, 12c et 12d régulièrement répartis autour du rotor et agencés par paires, de sorte que les électroaimants de chaque paire soient disposés de manière symétrique de part et d'autre du rotor 10.

Des capteurs 34 mesurent la position du rotor 10 dans deux directions perpendiculaires. La position mesurée est comparée à l'aide de comparateurs 16 à des valeurs de consigne C respectives. L'erreur ε ainsi élaborée est présentée en entrée d'un régulateur 18, par exemple un régulateur de type PID (Proportionnel Intégral Dérivé). La sortie du régulateur 18 est représentative de la force à appliquer sur le rotor pour le maintenir dans sa position d'équilibre. Des amplificateurs 20 reçoivent donc ce signal de commande et génèrent des courants électriques qui sont envoyés dans les électroaimants 12a, 12b, 12c et 12d.

Comme on le voit sur la figure 2, dans l'exemple de réalisation présenté sur cette figure, le palier magnétique actif comporte deux paires d'électroaimants s'étendant selon deux directions perpendiculaires et permettant conjointement de contrôler les directions par exemple verticale et horizontale du rotor dans l'entrefer du palier.

Le palier actif radial 12 est activé avant chaque démarrage de la machine afin que le rotor se situe normalement en sustentation magnétique. Au contraire, le palier 12 est désactivé, après l'arrêt de la machine, lorsque la vitesse de rotation du rotor est nulle. Dans ce cas, le rotor repose sur les paliers auxiliaires 14 afin d'éviter qu'il entre en contact avec les tôles magnétiques des électroaimants ou sur d'autres parties de la machine.

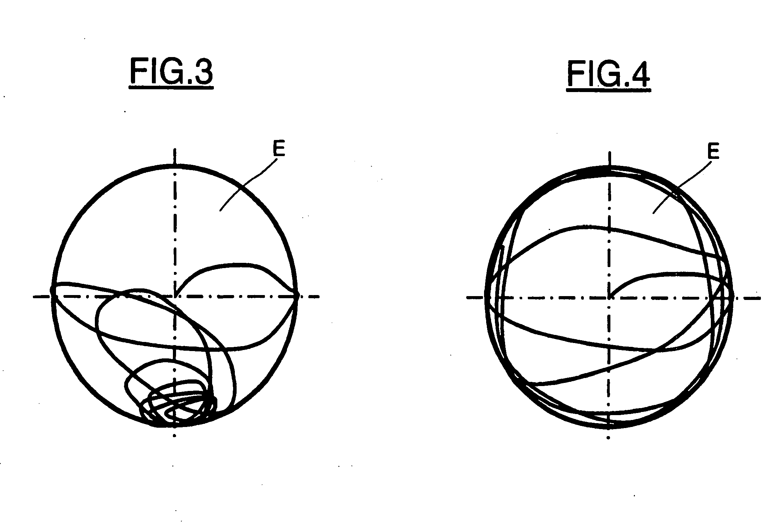

Comme on le conçoit, en cas de dysfonctionnement des moyens d'alimentation des électroaimants 12a, 12b, 12c, ou du régulateur 18, le rotor, qui n'est plus maintenu en position centrale par les électroaimants vient en contact avec le palier auxiliaire 14. Dans ce cas, l'effort de frottement du rotor sur le palier auxiliaire a tendance à provoquer un déplacement du rotor le long de la surface interne du palier auxiliaire 14, selon un mouvement de précession dans un sens inverse de celui de la rotation du rotor autour de son axe longitudinal. Comme visible sur la figure 3, lorsque le rotor s'étend à l'horizontale, la force de la pesanteur s'oppose au déplacement du rotor le long de la surface du palier auxiliaire 14 et a tendance à le faire descendre sur la génératrice inférieure de ce palier auxiliaire 14. Lorsque le coefficient de frottement du palier auxiliaire est suffisamment faible, le rotor oscille de façon stable au fond de son palier auxiliaire.

Au contraire, en l'absence de la pesanteur (figure 4), c'est-à-dire lorsque le rotor 10 s'étend en position verticale, le rotor est animé de mouvements erratiques dans l'entrefer des paliers auxiliaires 14. La force de frottement excite alors des modes propres de flexion du rotor. Il s'ensuit un tournoiement du rotor dans le sens inverse de la vitesse de rotation dans le jeu radial du palier auxiliaire. Comme indiqué précédemment, les efforts développés sur ces paliers deviennent conséquents et la flèche prise par le rotor peut devenir ainsi très importante, notamment à la traversée des fréquences propres de flexion et provoquer des dégâts irrémédiables.

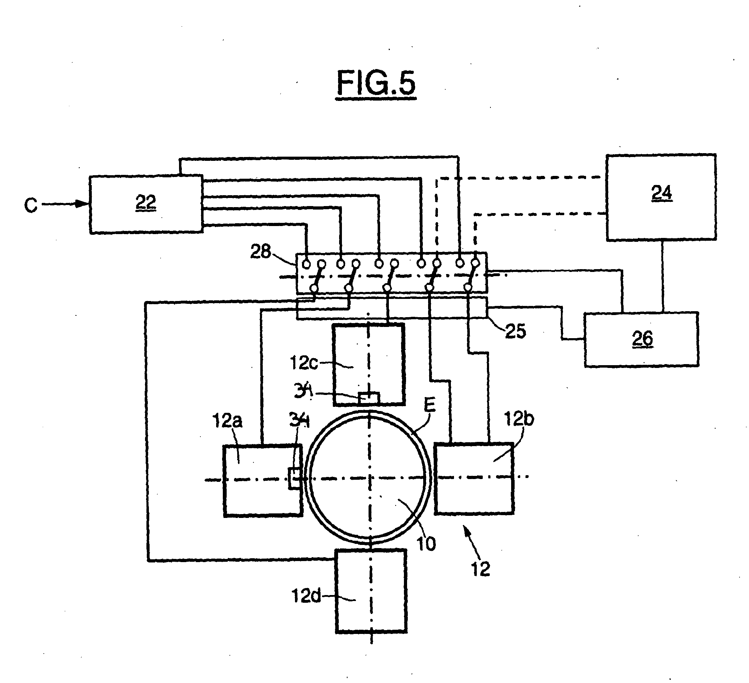

On a représenté sur la figure 5 un palier magnétique actif radial amélioré permettant de pallier cet inconvénient.

Sur cette figure, des éléments identiques à ceux décrits précédemment en référence aux figures 1 et 2 sont désignés par les mêmes références numériques.

Comme on le voit sur cette figure, le palier 12 est également constitué d'un ensemble d'électroaimants 12a, 12b, 12c et 12d alimentés par des moyens d'alimentation 22 incorporant un régulateur apte à réguler la position du rotor 10 fourni par des capteurs 34 autour d'une valeur de consigne C prédéterminée correspondant à une position centrale du rotor 10 dans l'entrefer E.

Afin de pallier les problèmes liés aux déplacements erratiques du rotor 10 dans l'entrefer E en cas de dysfonctionnement de la source 22, ou du régulateur, ou en cas d'altération des câbles de liaison entre l'armoire électronique de commande de la machine et la machine, l'un des électroaimants, à savoir l'électroaimant désigné par la référence 12b, est alimenté, lorsqu'un dysfonctionnement est détecté, par une source de courant 24 de sorte que le rotor 10 soit attiré contre cet électroaimant 12b de manière à obtenir un comportement analogue au comportement obtenu sous l'effet de la pesanteur.

Un étage de surveillance 26 associé à des capteurs 25 de mesure du courant délivré aux électroaimants 12a, 12b, 12c et 12d surveille le niveau de courant délivré à ces électroaimants et, dès que le courant devient inférieur à une valeur de seuil prédéterminée correspondant à l'apparition d'un dysfonctionnement, met en oeuvre la source de courant 24 et pilote un ensemble de relais 28 pour alimenter l'électroaimant 12b tout en isolant l'ensemble des autres électroaimants de la source de courant 22.

Ainsi, en cas de dysfonctionnement, le courant délivré par la source 24 est automatiquement appliqué à l'électroaimant 12b, créant ainsi une force d'attraction dans une direction radiale constante analogue à la force de pesanteur appliquée sur un axe à axe de rotation horizontale.

Comme on le conçoit, la source de courant 24 est une source distincte de la source 22 utilisée lors du fonctionnement normal du palier 12, ce qui permet d'obtenir une fiabilité accrue. Afin d'augmenter encore la fiabilité, de préférence, on prévoira une source de courant additionnelle destinée à être mise en oeuvre en cas de dysfonctionnement de la source de courant 24.

On notera que, de préférence, on positionnera les moyens selon l'invention qui sollicitent le rotor vers l'un des électroaimants en cas de dysfonctionnement au plus près de la machine tournante pour s'affranchir également d'un éventuel endommagement des câbles d'alimentation électriques et d'instrumentation.

On notera enfin que l'invention s'applique également à des machines à axe horizontal afin d'en accroître la stabilité en cas d'atterrissage, c'est-à-dire lorsque le rotor n'est plus en sustentation.

## Revendications

1. Palier magnétique actif radial pour rotor de machine tournante, comprenant un ensemble d'électroaimants (12a, 12b, 12c, 12d) destinés à être régulièrement répartis autour du rotor (10), des moyens d'alimentation des électroaimants comprenant des moyens de régulation (22) pour réguler l'alimentation des électroaimants de manière à solliciter le rotor en position sensiblement centrale par rapport aux électroaimants lors du fonctionnement normal du palier, et des moyens (24, 26, 28) pour solliciter le rotor vers l'un des électroaimants en cas de dysfonctionnement, **caractérisé en ce que** les moyens pour solliciter le rotor vers l'un des électroaimants comportent une source d'alimentation principale (24) pour alimenter cet électroaimant de manière à attirer le rotor vers ce dernier, et **en ce que** la source d'alimentation (24) principale est distincte des moyens d'alimentation des électroaimants utilisés lors du fonctionnement normal du palier.

2. Palier magnétique selon la revendication 1, **caractérisé en ce qu**'il comporte en outre une source d'alimentation de secours destinée à être mise en oeuvre en cas de dysfonctionnement de ladite source d'alimentation principale (24).

3. Palier magnétique selon l'une des revendications 1 et 2, **caractérisé en ce qu**'il comporte un circuit de commande (26) apte à surveiller le niveau de courant délivré aux électroaimants et comportant des moyens de comparaison pour comparer le niveau de courant fourni aux électroaimants avec une valeur de seuil de détection de dysfonctionnement pour activer lesdits moyens pour solliciter le rotor.

4. Machine tournante, comprenant un rotor entraîné en rotation par des moyens moteurs par rapport à un stator, et des paliers radiaux (12a, 12b, 12c, 12d) prévus à au moins l'une des extrémités mutuellement opposées du rotor, les paliers radiaux comprenant des paliers actifs et des paliers auxiliaires sur lesquels repose le rotor en cas de dysfonctionnement des paliers actifs ou à l'arrêt de ces paliers, **caractérisé en ce que** les paliers magnétiques actifs sont constitués par des paliers selon l'une quelconque des revendications 1 à 3.

5. Machine tournante selon la revendication 4, **caractérisée en ce que** le rotor comporte un axe vertical.

## Claims

1. Radial active magnetic bearing for a rotating machine rotor, comprising a set of electromagnets (12a, 12b, 12c, 12d) intended to be uniformly distributed around the rotor (10), means for supplying the electromagnets comprising regulating means (22) for regulating the supply to the electromagnets so as to urge the rotor to stay in the substantially central position relative to the electromagnets during normal operation of the bearing, and means (24, 26, 28) for urging the rotor towards one of the electromagnets in the event of a malfunction, **characterized in that** the means for urging the rotor towards one of the electromagnets comprise a main power supply (24) for supplying this electromagnet so as to attract the rotor towards the latter, and **in that** the main power supply (24) is separate from the means for supplying the electromagnets used during normal operation of the bearing.

2. Magnetic bearing according to Claim 1, **characterized in that** it further includes an emergency power supply intended to be used in the event of malfunction of said main power supply (24).

3. Magnetic bearing according to either of Claims 1 and 2, **characterized in that** it includes a control circuit (26) capable of monitoring the level of current delivered to the electromagnets and comprising comparison means for comparing the level of current delivered to the electromagnets with a malfunction detection threshold value in order to activate said means for urging the rotor.

4. Rotating machine, comprising a rotor driven in rotation relative to a stator by drive means, and radial bearings (12a, 12b, 12c, 12d) provided on at least one of the mutually opposed ends of the rotor, the radial bearings comprising active bearings and auxiliary bearings on which the rotor will rest in the event of malfunction of the active bearings or when these bearings stop, **characterized in that** the active magnetic bearings are formed by bearings according to any one of Claims 1 to 3.

5. Rotating machine according to Claim 4, **characterized in that** the rotor has a vertical axis.

## Patentansprüche

1. Aktives magnetisches Radiallager für den Läufer einer rotierenden Maschine, mit einer Anordnung von Elektromagneten (12a, 12b, 12c, 12d), die dazu eingerichtet sind, gleichmäßig um den Läufer (10) herum verteilt zu werden, Stromversorgungsmittel für die Elektromagneten, die Steuerungsmitteln (22) zum Regeln/Steuern der Stromversorgung der Elektromagneten umfassen, um den Läufer während des normalen Betriebs des Lagers in Bezug auf die Elektromagneten im Sinne einer im Wesentlichen zentrischen Lage zu unterstützen, und Mitteln (24, 26, 28), die dazu dienen, den Läufer im Falle einer Fehlfunktion in Richtung auf einen der Elektromagneten zu unterstützen, **dadurch gekennzeichnet, dass** die Mittel zum Untersützen des Läufers in Richtung auf einen der Elektromagneten eine Hauptstromquelle (24) enthalten, die dazu dient, diesen Elektromagneten mit Strom zu versorgen, um den Läufer gegen den Letzteren anzuziehen, und dass die Hauptstromquelle (24) unabhängig von den während des normalen Betriebs des Lagers verwendeten Stromversorgungsmittel der Elektromagneten ist.

2. Magnetisches Lager nach Anspruch 1, **dadurch gekennzeichnet, dass** es außerdem eine Hilfsstromquelle enthält, die dazu eingerichtet ist, im Falle einer Fehlfunktion der Hauptstromquelle (24) in Betrieb genommen zu werden.

3. Magnetisches Lager gemäß einem der Ansprüche 1 und 2, **dadurch gekennzeichnet, dass** es einen Steuerungsschaltkreis (26) enthält, der dazu eingerichtet ist, den Stromwert zu überwachen, mit dem der Elektromagnet beaufschlagt wird, und der Vergleichsmittel aufweist, die dazu dienen, den Stromwert, mit dem der Elektromagnet beaufschlagt wird, mit einem Schwellwert zur Erfassung einer Fehlfunktion zu vergleichen, um die Mittel zum Unterstützen des Läufers zu aktivieren.

4. Rotierende Maschine, zu der gehören: ein Läufer, der durch Antriebsmittel in Bezug auf einen Stator in Drehung versetzt wird, und Radiallager (12a, 12b, 12c, 12d), die an wenigstens einem der einander gegenüberliegenden Enden des Läufers vorgesehen sind, wobei zu den Radiallagern aktive Lager sowie Hilfslager gehören, auf denen der Läufer im Falle einer Fehlfunktion der aktiven Lager oder eines Abschaltens dieser Lager gelagert wird, **dadurch gekennzeichnet, dass** die aktiven magnetischen Lager auf Lagern nach einem der Ansprüche 1 bis 3 basieren.

5. Rotierende Maschine nach Anspruch 4, **dadurch gekennzeichnet, dass** der Läufer eine vertikale Achse aufweist.
